# EUROPEAN PATENT APPLICATION

(11) **EP 4 216 555 A1**
(43) Date of publication of application: **26.07.2023**
(21) Application number: 22152868.0
(22) Date of filing: 24.01.2022
(51) Int. Cl.: H04N 21/2343, H04N 21/845, H04N 21/443, H04N 21/43, H04N 21/658, H04L 65/65

(54) **COMPUTER IMPLEMENTED METHOD FOR PROCESSING STREAMING REQUESTS AND RESPONSES**

(71) Applicant: THEO Technologies, 3001 Leuven (BE)
(72) Inventor: SPEELMANS, Pieter-Jan, 3290 Diest (BE); TIELEMANS, Steven, 3000 Leuven (BE)
(74) Representative: IP HILLS NV

(57) **Abstract**

Example embodiments describe a computer implemented method for streaming media from a media server to a client web application running in a client web engine. The method comprises, by the client web application, initiating a programmable network proxy in the client web engine. The method further comprises, by the programmable network proxy, intercepting a request from the client web application to retrieve the streaming media from the media server and/or intercepting a response comprising the streaming media from the media server. The method further comprises, by the programmable network proxy, performing at least one of: i) injecting metadata into the intercepted request; ii) extracting metadata from the intercepted request; iii) injecting metadata into the intercepted response; and iv) extracting metadata from the intercepted response; and respectively forwarding the intercepted request to the media server and/or forwarding the intercepted response to the client web application.

## Description

### Field of the Invention

The present invention generally relates to the streaming of media from a server to a client over a telecommunications network.

### Background of the Invention

Streaming media relates to the provisioning of multimedia from a remote source to a playback application over a telecommunications network. Streaming media can be consumed in a continuous manner while being received, i.e. before obtaining the entire media content. The playback application, e.g. a video player, typically runs on a computing platform of a client device such as a computer, a smartphone, a smart-TV, or a digital media player.

These computing platforms natively support a set of application programming interfaces, APIs, for playback of multimedia, e.g. the AVPlayer on the iOS platform, the AVPlay on the Tizen platform, and the HTMLMediaElement in web browsers. A problem of these natively supported APIs is that they offer limited control of the streaming process, e.g. by only supporting a limited set of streaming protocols, by not supporting specific features of a streaming protocol, by blocking access to metadata in the media stream, by inhibiting analysis of media content acquisition, and/or by preventing manipulation of media content requests. As such, the playback capabilities of some native playback applications is limited.

To provide the desired playback capabilities and control of the streaming process, non-native playback applications can be used as a client-side solution. These have to be developed based on the base APIs of the respective computing platform. A problem of this is that the base APIs of some computing platforms do not provide sufficient access to the streaming process. On the other hand, server-side solutions to address these issues are typically complex and costly to implement.

### Summary of the Invention

It is an object of the present invention, amongst others, to solve or alleviate the above identified challenges and problems by enhancing control of the streaming process while preserving compatibility with natively supported APIs for playback of streaming media.

According to a first aspect, this object is achieved by a computer implemented method for streaming media from a media server to a client web application running in a client web engine. The method comprises, by the client web application, initiating a programmable network proxy in the client web engine. The method further comprises, by the programmable network proxy, intercepting a request from the client web application to retrieve the streaming media from the media server and/or intercepting a response comprising the streaming media from the media server. The method further comprises, by the programmable network proxy, performing at least one of: i) injecting metadata into the intercepted request; ii) extracting metadata from the intercepted request; iii) injecting metadata into the intercepted response; and iv) extracting metadata from the intercepted response; and respectively forwarding the intercepted request to the media server and/or forwarding the intercepted response to the client web application.

The programmable network proxy acts as an intermediary between a client web engine and a media server. This allows to intercept a request from a client web application running in the client web engine to retrieve streaming media from the media server. The request can comprise metadata in addition to an identifier of the streaming media to be retrieved from the media server. The metadata can be associated with the streaming process, the playback of the streaming media, and/or the requested streaming media. By intercepting the request, the metadata can be extracted prior to forwarding the request to the media server. Alternatively or complementary, the intercepted request can be augmented by injecting metadata prior to the forwarding. This allows to analyse streaming media acquisition and allows to manipulate streaming media requests while using natively supported APIs for the playback of the streaming media.

The programmable network proxy further allows to intercept the corresponding response from the media server. The intercepted response can also comprise metadata in addition to the requested streaming media. This metadata can either be embedded into the streaming media or can be included in the response as a separate data stream, e.g. by using a container format such as MP4, audio video interleave, AVI, or the Matroska multimedia container, MKV. By intercepting the response, the metadata can be extracted prior to forwarding the response to the client web application for playback. Alternatively or complementary, the intercepted response can be augmented by injecting metadata prior to the forwarding. This allows to process metadata in the media stream and allows to support specific features of a streaming protocol while using natively supported APIs for the playback of the streaming media.

It is thus an advantage that streaming requests and streaming responses can be processed to enhance the streaming process while preserving compatibility with natively supported APIs for media playback. As such, new features can be implemented in a streaming service or existing features of a streaming service can be enhanced that are not supported by native APIs for media playback. It is thus a further advantage that the user experience can be improved by the injected and/or extracted metadata without building custom playback applications or implementing complex and costly server-side solutions. It is a further advantage that the above method can be easily implemented into existing computing platforms on the client-side and that the above method is compatible with a variety of playback applications and streaming protocols. As such, a streaming service can be provided with substantially similar playback capabilities on different playback applications and client devices.

According to an embodiment, the programmable network proxy can be a service worker running services for one or more client web applications associated with the same network domain.

A service worker is a script that the client web engine can run in the background, e.g. a JavaScript worker, running services for one or more client web applications associated to the same network domain. A service worker is characterized by a lifecycle that is substantially separate from the client web applications it runs services for. The service worker thereby allows to control how requests and responses are handled between one or more client web applications running in a client web engine and a media server.

According to an embodiment, the request can originate from a playback client instantiated by the client web application.

The playback client can be configured to decode or decompress the streaming media into a sequence of frames such that the streaming media can be played back within the client web engine. Decoding of the streaming media may be performed by hardware decoding, software decoding, or a combination thereof. The playback client can further be configured to display the decoded streaming media on a client device, e.g. on a screen of a computer, a tablet, or a smart-TV. The playback client can use the metadata extracted from and/or injected into the intercepted response to improve the viewer experience, e.g. by enhancing a video resolution or by adding an interactive overlay to a video. The metadata can be provided to the playback client in a separate data stream and/or can be embedded in the streaming media.

According to an embodiment, the metadata injected into and/or extracted from the intercepted request can comprise information indicative for a state of the playback client.

The state of the playback client may for example include information on, amongst others, buffering, playback quality, bandwidth, media type, and playback settings. Preferably, the metadata in the request can be structured according to a standard specification such as the Common-Media-Client-Data, CMCD, specification. This can allow to associate client-side data more easily with server-side data, thereby improving insights in the viewer quality-of-experience and the quality-of-service. This has the further advantage that streaming services can be adjusted more efficiently as to improve viewer experience.

According to an embodiment, the metadata injected into the intercepted response can comprise information indicative for synchronization with the streaming media.

In other words, the metadata injected into the intercepted response comprises information that allows to synchronize the playback of the streaming media with another data stream. This data stream may be embedded in the streaming media, may be included as a separate stream in the response, or can be loaded in a separate side-channel in parallel to the response. It is a further advantage that such metadata can be synchronized with the streaming media, which can result in improved interactivity while streaming.

According to an embodiment, the metadata extracted from the intercepted response can comprise information for enhancing the streaming media.

Enhancing the streaming media can include any modification of the streaming media that improves the quality-of-experience of a viewer such as, for example, enhancing the perceptual quality of the media or adding interactive overlays to the media. This can allow playback applications for which the metadata is unreadable to benefit from video coding formats with improved compression efficiency such as low complexity enhancement video coding, LCEVC. It is a further advantage that this can reduce the cost of streaming by reducing bandwidth consumption, and can improve interactivity while streaming.

According to an embodiment, metadata can be extracted from the intercepted request and/or the intercepted response by an extraction component.

The extraction component can be a substantially separate script or module running in the client web engine. The programmable network proxy can expose the intercepted request and/or the intercepted response to this extraction component such that the metadata can be extracted therefrom. The extraction component may further be configured to process and use the extracted metadata, e.g. to enhance the media playback. Alternatively or complementary, the extraction component can provide the extracted metadata to another component for further processing, e.g. an analytics program or an ad insertion module.

According to an embodiment, metadata can be injected into the intercepted request and/or the intercepted response by an injection component.

The injection component can be a substantially separate script or module running in the client web engine. The programmable network proxy can expose the intercepted request and/or the intercepted response to this injection component such that the metadata can be injected therein. The injection component can obtain the metadata to be injected in the intercepted request and/or response from another script, module, or component such as, for example, a playback client or a remote server.

According to an embodiment, a structure of the request and the response can be compliant with a streaming protocol selected from the group comprising smooth streaming, dynamic adaptive streaming over HTTP, DASH, high-efficiency streaming protocol, HESP, and HTTP live streaming, HLS.

In other words, the request from the client web application to retrieve the streaming media from the media server, and the corresponding response from the media server comprising the streaming media can be substantially structured according to a streaming protocol selected from the group comprising smooth streaming, dynamic adaptive streaming over HTTP, DASH, high-efficiency streaming protocol, HESP, and HTTP live streaming, HLS.

According to an embodiment, a structure of the request and the response can be compatible with a playback client that supports a streaming protocol selected from the group comprising smooth streaming, dynamic adaptive streaming over HTTP, DASH, high-efficiency streaming protocol, HESP, and HTTP live streaming, HLS.

In other words, the request from the client web application to retrieve the streaming media from the media server, and the corresponding response from the media server comprising the streaming media can have any structure as long as this structure can be compatible with a playback client that supports a streaming protocol selected from the group comprising smooth streaming, dynamic adaptive streaming over HTTP, DASH, high-efficiency streaming protocol, HESP, and HTTP live streaming, HLS.

According to a second aspect, the invention relates to a data processing system configured to perform the computer implemented method according to the first aspect.

According to a third aspect, the invention relates to a computer program comprising instructions which, when the program is executed by a computer, cause the computer to perform the computer implemented method according to the first aspect.

According to a fourth aspect, the invention relates to a computer-readable medium comprising instructions which, when executed by a computer, cause the computer to perform the computer implemented method according to the first aspect.

### Brief Description of the Drawings

Fig. 1 shows an example embodiment of a system for streaming media from a media server to a client web application running in a client web engine according to an embodiment;
Fig. 2 shows steps according to a computer implemented method for streaming media from a media server to a client web application running in a client web engine according to an embodiment;
Fig. 3 shows an example embodiment of functional components within a client web engine for streaming media from a media server to a plurality of client web applications according to embodiments;
Fig. 4 shows an example embodiment of functional components for streaming media from a media server to a playback client running in a client web engine according to embodiments; and
Fig. 5 shows an example embodiment of a suitable computing system for performing steps according to example aspects of the invention.

### Detailed Description of Embodiment(s)

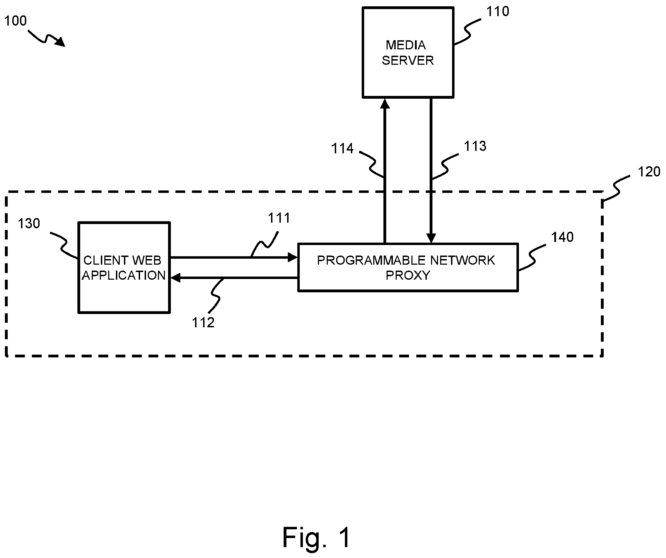

Fig. 1 shows an example embodiment of a system 100 for streaming media from a media server 110 to a client web application 130 running in a client web engine 120 according to an embodiment.

Streaming refers to the process of requesting streaming media from the media server 110 and starting the playback of this streaming media upon receiving the first segments of the media without having received all segments, i.e. without having received the entire media content. A streaming service is a remote service offered by a streaming service provider that provides streaming media over a telecommunications network, e.g. the Internet, a wide area network, WAN, or a local area network, LAN. The streaming media can be any type of digital multimedia provided over the telecommunications network such as, for example, video, audio, images, text, animations, or a combination thereof.

The media server 110 can be any device that stores this digital multimedia and makes it available over the network upon request. The media server 110 can for example be a dedicated server, a personal computer, or a network attached storage, NAS. The media server 110 can further be part of a geographically distributed network of proxy servers and data centres, i.e. a content delivery network, CDN. The media server 110 can be managed by a streaming service provider that provides a streaming service to clients.

The streaming media is requested from a client web application 130 running in a client web engine 120. The client web application 130, also web application or web app, is a computer program which the client can run in a client web engine 120. The client web engine 120 is a software component that transforms resources, e.g. Javascript, hypertext markup language, HTML, and cascading style sheets, CSS, into an interactive visual representation on a client device. The client web engine 120 can for example be, amongst others, Gecko, MSHTML, EdgeHTML, KHTML, WebKit, or Blink. The client web engine 120 can be embedded in a web browser such as, for example, Google Chrome, Internet Explorer, Microsoft Edge, Opera, Mozilla Firefox, Yandex Browser, or Safari. Alternatively, the client web engine 120 can also be embedded in a dedicated computer application.

The web browser or the dedicated computer application that embeds the client web engine 120 can be implemented on a computing platform of a suitable client device. The client device can be any electronic device capable of receiving a digital representation of the streaming media over a communication network, decoding the digital representation, and presenting the streaming media to a user for consumption, e.g. a desktop computer, a laptop, a tablet, a smartphone, a smart-TV, a digital media player, or a set-top box.

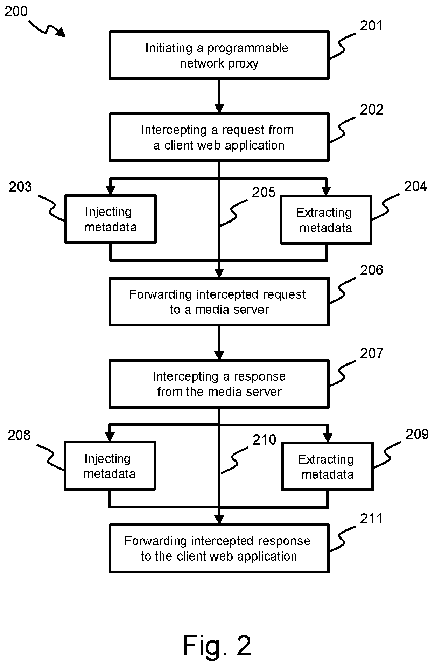

Fig. 2 shows steps 200 according to a computer implemented method for streaming media from a media server to a client web application running in a client web engine according to an embodiment. In a first step 201, the client web application 130 initiates a programmable network proxy 140 in the client web engine 120. This initiating can for example be triggered by launching the client web application 130. The programmable network proxy 140 acts as an intermediary between the client web engine 120 and the media server 110. As such, in a following step 202, the programmable network proxy 140 can intercept a request 111 to retrieve streaming media from the media server 110 originating from the client web application 130.

The request 111 comprises an identifier of the streaming media to be retrieved from the media server 110. The request 111 can for example be an HTTP request comprising a uniform resource locator, URL, to identify the streaming media. The request 111 can further comprise metadata, for example as a custom HTTP request header, as an HTTP query argument, or as an object independent of the HTTP request such as a JavaScript Object Notation, JSON. The metadata in the intercepted request can comprise quality metrics associated with the streaming process, the playback of the streaming media, and/or the requested streaming media such as, for example, an encoded bitrate, a buffer length, a content ID, a fragment duration, a deadline, a measured throughput, a playback rate, a used streaming protocol, and/or a session ID.

Hereafter, the programmable network proxy 140 can inject 203 metadata into the intercepted request 111, extract 204 metadata from the intercepted request 111, or both. It will be apparent to the skilled person that extracting metadata from the intercepted request 111 may, but need not, refer to removing the metadata from the intercepted request 111. In other words, extracting the metadata may refer to identifying, reading, and/or processing the metadata in the intercepted request 111 without substantially removing it from the request 111. Alternatively, as illustrated by step 205, the programmable network proxy 140 merely intercepts the request 111 without substantially processing it. In a following step 206, the programmable network proxy 140 forwards 114 the intercepted request 111 to the media server 110.

By intercepting the request 111, the metadata can thus be extracted and/or injected prior to forwarding 114 the request to the media server 110. This allows to analyse streaming media acquisition and to manipulate streaming media requests while using natively supported APIs for the playback of the streaming media.

The metadata in the request can further be processed or used on the client-side, the server-side, or both. By this processing, the quality of the streaming process can be analysed as the extracted metadata and the injected metadata can comprise quality metrics associated with the streaming process, the playback of the streaming media, and/or the requested streaming media. The quality metrics can for example be processed by performing log analysis, Quality-of-Service, QoS, monitoring, Quality-of-Experience, QoE, monitoring, or delivery optimization. The analysis of quality metrics of the streaming process can further be simplified by structuring the quality metrics uniformly, thereby reducing the amount of analytics systems and monitoring system to be used by a streaming service provider. Additionally, the visibility of quality metrics of the streaming process can be improved, in particular when streaming to a variety of computing platforms where native playback applications are to be used that offer limited support for quality metrics, e.g. iOS, iPadOS, Safari web browser, and smart-TVs. This can further allow the streaming service provider to adjust its streaming services more efficiently as to improve the viewer experience.

In a next step 207, the programmable network proxy 140 intercepts the corresponding response 113 from the media server 110 comprising the requested streaming media. In addition to the streaming media, the response 113 can also comprise metadata. The metadata in the response 113 can be embedded directly into the streaming media, i.e. in the media stream. The metadata can also be included in the response 113 as a separate data stream, e.g. by means of a container format such as MP4, audio video interleave, AVI, or the Matroska multimedia container, MKV. The metadata in the response 113 can for example, amongst others, include information on timestamps, video resolution, compression, file size, closed captioning, audio languages, ad-insertion points, colour spaces, error messages, and/or any other streaming information known to the skilled person.

Hereafter, the programmable network proxy 140 can either inject 208 metadata into the intercepted response 113, extract 209 metadata from the intercepted response 113, or both. It will be apparent to the skilled person that extracting metadata from the intercepted response 113 may, but need not, refer to removing the metadata from the intercepted response 113. In other words, extracting the metadata may refer to identifying, reading, and/or processing the metadata in the intercepted response 113 without substantially removing it from the response 113. Alternatively, as illustrated in step 210, the programmable network proxy 140 merely intercepts the response 113 without substantially processing it. In a final step 211, the programmable network proxy 140 forwards 112 the intercepted response 113 to the client web application 130 for playback of the streaming media.

By intercepting the response 113, metadata can be extracted and/or injected prior to forwarding 112 the response to the client web application for playback. This allows to process metadata in the media stream and to support specific features of a streaming protocol while using natively supported APIs for the playback of the streaming media, e.g. AVPlayer on the iOS platform or AVPlay on the Tizen platform.

It is thus an advantage that streaming requests and streaming responses can be processed to enhance the streaming process while preserving compatibility with natively supported APIs for media playback. As such, new features can be implemented in a streaming service or existing features of a streaming service can be enhanced that are not supported by native APIs for media playback. It is thus a further advantage that the user experience can be improved by the injected and/or extracted metadata without building custom playback applications or implementing complex and costly server-side solutions. It is a further advantage that the above method can be easily implemented into existing computing platforms on the client-side and that the above method is compatible with a variety of playback applications and streaming protocols. As such, a streaming service can be provided with substantially similar playback capabilities on different playback applications and client devices.

It will be apparent to the skilled person that the programmable network proxy 140 can be configured to only intercept requests 111 from a client web application 130, to only intercept responses 113 from a media server 110, or to intercept both requests 111 and responses 113. In other words, the programmable network proxy 140 can be configured to intercept and forward streaming requests while the corresponding streaming responses are directly obtained by the client web application 130, or vice versa. The programmable network proxy 140 can further be configured to only intercept predetermined requests 111 and/or responses 113, e.g. requests and responses characterized by a predetermined session ID.

The data communication, i.e. the streaming requests and responses, between the client web application 130 and the media server 110 can preferably be structured in compliance with a streaming protocol selected from the group comprising smooth streaming, dynamic adaptive streaming over HTTP, DASH, high-efficiency streaming protocol, HESP, HTTP live streaming, HLS, secure reliable transport, SRT, web real-time communications, webRTC, or any other streaming protocol known to the skilled person. The request 111 and the corresponding response 113 can further be structured according to a substantially different streaming protocol. For example, an intercepted request 111 structured according to a first streaming protocol can be converted to a second streaming protocol prior to being forwarded to the media server 110.

The metadata extracted from the intercepted response 113 can comprise information for enhancing the streaming media. Enhancing the streaming media can include any modification of the streaming media that improves the quality-of-experience of a viewer. This can for example include, amongst others, enhancing the perceptual quality of the streaming media, adding dynamic overlays to the streaming media, adding personalized overlays to the streaming media, announcing ads to the viewer, or modifying a user interface. Such overlays can for example be, amongst others, annotations during sport events, live bets during sport events, gaming statistics during e-sports, annotations during live auctions, shopping within a live stream, or a virtual education experience.

An example of enhancing the perceptual quality of the streaming media by the extracted metadata can be low complexity enhancement video coding, LCEVC. LCEVC is a video coding format that specifies a base video stream in addition to an enhancement stream, i.e. metadata. The enhancement stream is to be decoded and processed separately and can provide improved features to the base video stream such as enhancing the base video stream to higher resolutions. By intercepting the response 113 of a media server 110 that comprises a video segment encoded with LCEVC, the metadata, i.e. the enhancement stream, can be extracted from the response 113. The extracted metadata can then be used to enhance the resolution of the rendered video. As such, playback applications can benefit from the improved compression efficiency of LCEVC even if they do not support reading of the metadata directly from the streaming media. This can reduce the cost of streaming by reducing the cost of distribution, i.e. reducing bandwidth consumption.

The metadata injected into the intercepted response 113 can comprise information indicative for synchronization with the streaming media. In other words, the metadata injected into the intercepted response 113 comprises information that allows to synchronize the playback of the streaming media with another data stream, i.e. other metadata. This data stream can for example be client-specific metadata and may be embedded in the streaming media, may be included as a separate stream in the response 113, or may be loaded in a separate side-channel in parallel to the response 113. It is thus a further advantage that such metadata can be synchronized with the streaming media, which can result in improved interactivity while streaming.

Returning to the above example of LCEVC, such metadata indicative for synchronization can for example be injected into the intercepted response 113 as synchronization points or time references. These synchronization points can then be used to synchronize the playback of the LCEVC base video stream with the enhancement stream such that enhancement of the base video stream is performed correctly.

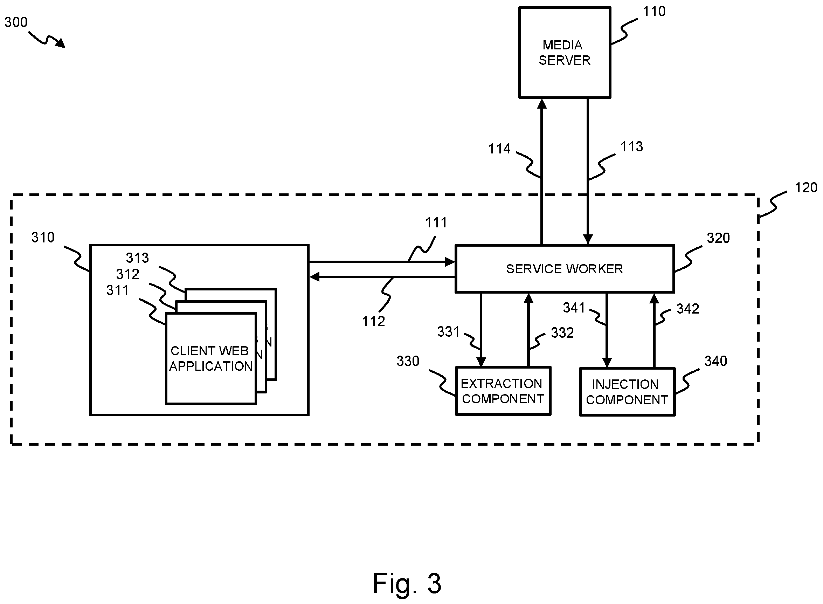

Fig. 3 shows an example embodiment 300 of functional components within a client web engine 120 for streaming media from a media server 110 to a plurality of client web applications 311, 312, 313 running in the client web engine 120 by means of a service worker 320.

A service worker 320 is an event-driven Web Worker for persistent background processing, e.g. a JavaScript worker. A service worker 320 can be used as a programmable network proxy, allowing to control how network requests from the client web engine 120 are handled. Service worker 320 is a script that the client web engine 120 can run in the background, running services for one or more client web applications 311, 312, 313. Service worker 320 is further characterized by a lifecycle that is substantially separate from the one or more client web applications 311, 312, 313 it runs services for. Preferably, the service worker 320 can run services for a plurality of client web applications 311, 312, 313 associated to the same network domain 310. In other words, service worker 320 can intercept requests 111 originating from any client web application 311, 312, 313 associated to network domain 310. Vice versa, service worker 320 can intercept responses 113 from the media server 110 intended for any client web application 311, 312, 313 associated to network domain 310. In doing so, metadata can be extracted from and/or injected into the intercepted response 113 and/or the intercepted request 111 by the service worker 320.

Alternatively, the metadata can be extracted from the intercepted requests 111 and/or the intercepted responses 113 by an extraction component 330. The extraction component 330 can be a substantially separate script or module running in the client web engine 120. By the service worker 320 or by a programmable network proxy, the intercepted requests 111 and/or the intercepted responses 113 can thus be exposed 331 to this extraction component 330 such that the metadata can be extracted therefrom. The extraction component 330 may be configured to further process and use the extracted metadata such as for example, amongst others, to enhance the playback of the streaming media or to analyse quality metrics. To this end, the extracted metadata can be provided 332 to the service worker 320 or a programmable network proxy for forwarding 112 to the respective client web application 311, 312, 313, or for forwarding 114 to the media server 110. Alternatively or complementary, the extraction component 330 can provide the extracted metadata to another component for further processing, e.g. an analytics program or an ad insertion module. This other component may, but need not be running in the client web engine 120.

Alternatively or complementary, the metadata can be injected into the intercepted requests 111 and/or the intercepted responses 113 by an injection component 340. The injection component 340 can be a substantially separate script or module running in the client web engine 120. By the service worker 320 or by a programmable network proxy, the intercepted requests 111 and/or the intercepted responses 113 can thus be exposed 341 to this injection component 340 such that the metadata can be injected therein. The injection component 340 may be configured to obtain the metadata to be injected in the intercepted requests 111 and/or responses 113. The injection component can obtain this metadata from another script, module, or component running in the browser engine 120. Alternatively or complementary, the injection component can obtain this metadata from an external script or module running elsewhere than in the browser engine 120. This external script or module can be running on the same client device or can be running on a remote device such as, for example, a connected computer or a remote server. The injected metadata can be provided 342 to the service worker 320 or a programmable network proxy for forwarding 112 to the respective client web application 311, 312, 313, or for forwarding 114 to the media server 110. The injected metadata can be embedded into the streaming media and/or in a separate data stream. In other words, the injection component can provide 342 the streaming media and the injected metadata, or solely the injected metadata to the service worker 320.

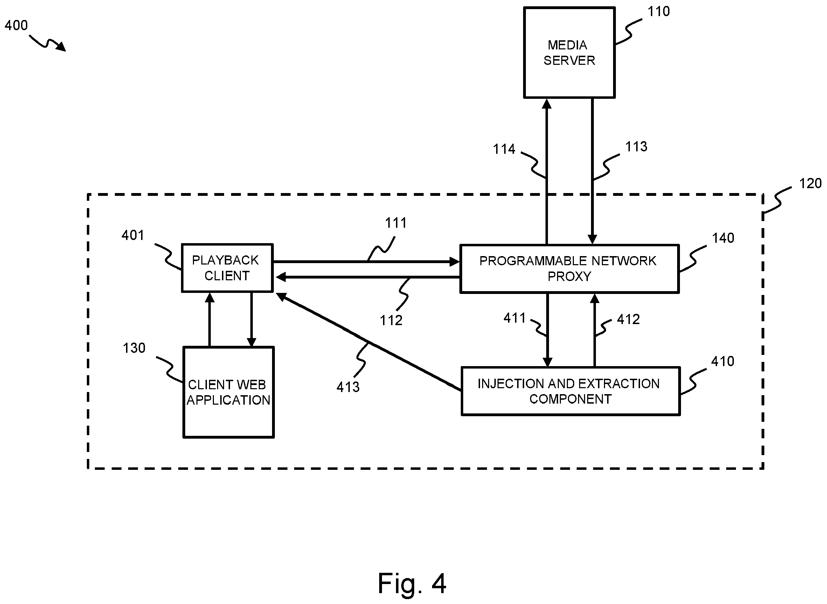

Alternatively, the extraction component 330 and the injection component 340 can be included in the same module 410, as illustrated in Fig. 4. Fig. 4 further shows an example embodiment 400 of functional components for streaming media from a media server 110 to a playback client 401 running in a client web engine 120.

The playback client 401 can be configured to decode or decompress the streaming media into a sequence of frames such that the streaming media can be played back within the client web engine 120. Decoding of the streaming media may be performed by hardware decoding, software decoding, or a combination thereof. By the playback client 401, the decoded sequence of frames can then be displayed to a user on a screen of a client device, e.g. a computer, a tablet, or a smart-TV. The playback client 401 can for example be, amongst others, a video player, a web player, or a media player.

The playback client 401 can further provide a user interface that allows to control and adjust the playback of the streaming media, e.g. adjusting the audio language, adjusting the closed captioning language, adjusting the video resolution, adjusting the playback speed, pausing the video playback, resuming the video playback, fast forwarding the video playback, and rewinding the video playback. Such adjustments of the media playback can trigger a request 111 to retrieve streaming media from the media server 110. For example, fast forwarding the video in time can trigger a request 111 to retrieve future segments of the streaming media that a user skipped to. In other words, the request 111 to retrieve streaming media from the media server 110 can originate from the playback client 401. The playback client can further be instantiated by the client web application 130, e.g. when loading a web page in a web browser or when launching a dedicated computer application.

The playback client 401 can further use the metadata extracted from and/or injected into the intercepted response 113 to improve the viewer experience as described above, i.e. by for example enhancing the video resolution or by adding an interactive overlay. The metadata can be provided to the playback client 401 by the programmable network proxy 140 in a separate data stream or can be embedded in the streaming media, i.e. the forwarded response 112 of the media server 110. Alternatively, the metadata can directly be provided 413 to the playback client 401 by an injection component, an extraction component, or a combined injection and extraction component 410. In other words, the metadata can be provided 413 to the playback client 401 without passing via the programmable network proxy 140. For example, the injection and extraction component 410 can provide the enhancement layer of an LCEVC encoded video, extracted from the intercepted response 113 of the media server 110, directly to the playback client 401 as a separate data stream 413.

The metadata injected into and/or extracted from the intercepted request 111 can further comprise information indicative for a state of the playback client 401. The state of the playback client 401 may for example include information on, amongst others, buffering, playback quality, bandwidth, media type, and playback settings. Preferably, the metadata in the request 111 can be structured according to a standard specification such as the Common-Media-Client-Data, CMCD, specification. This allows to associate client-side data more easily with server-side data, thereby improving insights in the viewer quality-of-experience and the quality-of-service. This has the further advantage that the streaming services can be adjusted more efficiently to improve viewer experience.

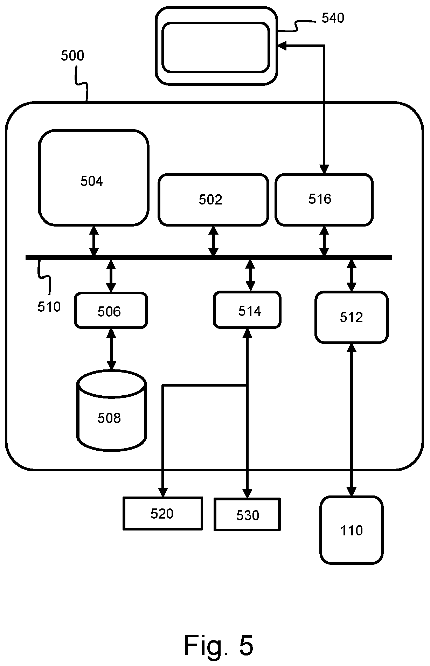

Fig. 5 shows a suitable computing system 500 enabling to implement embodiments of the above described method according to the invention. Computing system 500 may in general be formed as a suitable general-purpose computer and comprise a bus 510, a processor 502, a local memory 504, one or more optional input interfaces 514, one or more optional output interfaces 516, a communication interface 512, a storage element interface 506, and one or more storage elements 508. Bus 510 may comprise one or more conductors that permit communication among the components of the computing system 500. Processor 502 may include any type of conventional processor or microprocessor that interprets and executes programming instructions. Local memory 504 may include a random-access memory (RAM) or another type of dynamic storage device that stores information and instructions for execution by processor 502 and/or a read only memory (ROM) or another type of static storage device that stores static information and instructions for use by processor 502. Input interface 514 may comprise one or more conventional mechanisms that permit an operator or user to input information to the computing device 500, such as a keyboard 520, a mouse 530, a pen, voice recognition and/or biometric mechanisms, a camera, etc. Output interface 516 may comprise one or more conventional mechanisms that output information to the operator or user, such as a display 540, etc. Communication interface 512 may comprise any transceiver-like mechanism such as for example one or more Ethernet interfaces that enables computing system 500 to communicate with other devices and/or systems such as for example, amongst others, a media server 110. The communication interface 512 of computing system 500 may be connected to such another computing system by means of a local area network (LAN) or a wide area network (WAN) such as for example the internet. Storage element interface 506 may comprise a storage interface such as for example a Serial Advanced Technology Attachment (SATA) interface or a Small Computer System Interface (SCSI) for connecting bus 510 to one or more storage elements 508, such as one or more local disks, for example SATA disk drives, and control the reading and writing of data to and/or from these storage elements 508. Although the storage element(s) 508 above is/are described as a local disk, in general any other suitable computer-readable media such as a removable magnetic disk, optical storage media such as a CD or DVD, -ROM disk, solid state drives, flash memory cards, etc. could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A computer implemented method for streaming media from a media server (110) to a client web application (130) running in a client web engine (120), the method comprising:
- by the client web application (130), initiating (201) a programmable network proxy (140) in the client web engine (120);
- by the programmable network proxy, intercepting (202) a request (111) from the client web application to retrieve the streaming media from the media server and/or intercepting (207) a response (113) comprising the streaming media from the media server;
- by the programmable network proxy (140), performing at least one of:
- injecting (203) metadata into the intercepted request;
- extracting (204) metadata from the intercepted request;
- injecting (208) metadata into the intercepted response; and
- extracting (209) metadata from the intercepted response;
- respectively forwarding (206) the intercepted request to the media server and/or forwarding (211) the intercepted response to the client web application.

2. A computer implemented method according to claim 1, wherein the programmable network proxy is a service worker (320) running services for one or more client web applications (311, 312, 313) associated with the same network domain (310).

3. A computer implemented method according to any of the preceding claims, wherein the request (111) originates from a playback client (401) instantiated by the client web application (130).

4. A computer implemented method according to claim 3, wherein the metadata injected into and/or extracted from the intercepted request (111) comprises information indicative for a state of the playback client (401).

5. A computer implemented method according to any of the preceding claims, wherein the metadata injected into the intercepted response (113) comprises information indicative for synchronization with the streaming media.

6. A computer implemented method according to any of the preceding claims, wherein the metadata extracted from the intercepted response (113) comprises information for enhancing the streaming media.

7. A computer implemented method according to any of the preceding claims, wherein metadata is extracted from the intercepted request (111) and/or the intercepted response (113) by an extraction component (330).

8. A computer implemented method according to any of the preceding claims, wherein metadata is injected into the intercepted request (111) and/or the intercepted response (113) by an injection component (340).

9. A computer implemented method according to any of the preceding claims, wherein a structure of the request and the response are compliant with a streaming protocol selected from the group comprising smooth streaming, dynamic adaptive streaming over HTTP, DASH, high-efficiency streaming protocol, HESP, and HTTP live streaming, HLS.

10. A computer implemented method according to any of the preceding claims, wherein a structure of the request and the response are compatible with a playback client (401) that supports a streaming protocol selected from the group comprising smooth streaming, dynamic adaptive streaming over HTTP, DASH, high-efficiency streaming protocol, HESP, and HTTP live streaming, HLS.

11. A data processing system configured to perform the computer implemented method according to any one of claims 1 to 10.

12. A computer program comprising instructions which, when the program is executed by a computer, cause the computer to perform the computer implemented method according to any one of claims 1 to 10.

13. A computer-readable medium comprising instructions which, when executed by a computer, cause the computer to perform the computer implemented method according to any one of claims 1 to 10.
